# EUROPEAN PATENT APPLICATION

(11) **EP 4 494 743 A1**
(43) Date of publication of application: **22.01.2025**
(21) Application number: 24188877.5
(22) Date of filing: 16.07.2024
(51) Int. Cl.: B01D 53/26, G21F 5/008, G21F 5/06, G21F 5/12

(54) **METHOD OF DESICCATION OF CASKS FOR SPENT NUCLEAR FUEL AND/OR RADIOACTIVE WASTE, CASK FOR SPENT NUCLEAR FUEL AND/OR RADIOACTIVE WASTE, AND HOLLOW BODY CONTAINING DESICCANT FOR SUCH CASK**

(30) Priority: 20.07.2023 CZ 20230276
(71) Applicant: Skoda JS a.s., 316 00 Plzen (CZ)
(72) Inventor: Brich, Pavel, 31600 Plzen (CZ); Kupka, Tomas, 31600 Plzen (CZ); Svoboda, Vaclav, 31600 Plzen (CZ); Urban, Ludek, 31600 Plzen (CZ); Pekarova, Hana, 32300 Plzen (CZ); Pekar, Jan, 32300 Plzen (CZ)
(74) Representative: Pavlica, Tomas

(57) **Abstract**

The method of desiccation of casks for spent nuclear fuel, especially advantageously leaking spent nuclear fuel, and/or radioactive waste, consists of steps of filling the cask with spent nuclear fuel or radioactive waste containing water, especially of filling the cask with spent nuclear fuel or radioactive waste under water, of dewatering the cask interior, especially by pumping water out, and of vacuum-desiccating the cask interior. During vacuum desiccation of the cask, the vacuum desiccation process is interrupted several times, and during the period of each interruption pressure increase in the cask caused by water evaporation is measured over a predetermined time interval to establish the achieved degree of dryness in the cask. When reaching pressure increase in the cask corresponding to at most 10 hPa per 15 minutes, at least one hollow body containing a desiccant in the form of pills is put in the cask interior. Cask (1) for spent nuclear fuel or radioactive waste is provided with body (1a) with an inner room to be filled with spent nuclear fuel or radioactive waste, especially under water, and, further, with primary lid (3) designed to close the inner room of the body of cask (1), which inner room is provided under this primary lid (3), where primary lid (3) is provided with at least one closable bushing (4) for dewatering and desiccation of the inner room of the cask after filling and every closable bushing (4) is fitted with cap (5) to close it. At least one hollow body (6) containing a desiccant is arranged under at least one bushing (4) in the inner room of body (1a) of cask (1).

## Description

### Field of the invention

The invention discloses a method of desiccation of casks containing spent nuclear fuel and/or other radioactive content, advantageously also leaking spent nuclear fuel. The invention makes it possible to accelerate a desiccation process by placing at least one solid, pill-form desiccant in the cask interior during the desiccation process by means of at least one elongated hollow body provided with holes. Furthermore, the invention discloses a cask for spent nuclear fuel and/or radioactive waste, the cask is provided with a hollow body containing a desiccant and allows to accelerate the desiccation process, and furthermore discloses a desiccant containing hollow body, which can be placed in such cask and/or can be used to perform the method of desiccation of the cask according to this invention.

### Background of the invention

The casks used to transport and/or store spent nuclear fuel or radioactive waste are filled inside the nuclear facilities, mainly in the reactor units of nuclear power plants, under the water surface in the reactor pool where water not only provides for residual heat removal from the radioactive material but also shields from the ionizing radiation emitted by the spent nuclear fuel when being loaded into the cask thanks to the several-metre-high water column. While still under the water surface, a primary lid is put on the cask and the cask is then lifted from the pool and placed on the floor of the reactor unit hall or of the nuclear facility to perform the activities of processing the cask so as to be ready for transport and/or storage and/or reposition.

During the said processing, the cask, still full of pool water, must undergo a sequence of working and testing steps, at the end of which the radioactive material, being enclosed hermetically by the retaining system of the cask, is kept in a dry environment, most often surrounded by an inert gas, especially helium. The fundamental steps to achieve this goal are the pumping or draining of water from the cask interior and the subsequent removal of humidity, which is most frequently done by vacuum desiccation. During a vacuum desiccation, the water contained in the cask is transformed into a water vapour to be exhausted.

The vacuum desiccation represents the most challenging task in cask processing, especially by being of a time-consuming nature. This operation always lasts many hours, and the important factor which helps in the desiccation process is the residual heat output of the radioactive material. The typical period of duration of such cask desiccation process is 10 to 20 hours, and it becomes especially lengthy in the final desiccation phase where water vapours are drawn off in the least quantities. The long desiccation period, however, is undesirable given the radioactive loading of the personnel and the logistic and/or operational points of view and, in particular, there is the risk of overheating the fuel cluster cladding due to the poor heat removal in the vacuum environment. For this reason, an inert gas, advantageously helium, is let in the cask interior during the desiccation process to improve heat transfer from the fuel clusters to the cask wall and then to the cask surroundings. The biggest concern is then in leaking nuclear fuel if the hermetic seal of the fuel cladding has been damaged, resulting in undesirable penetration of water into its interior, for such water is very difficult to remove as, in practice, the breaks in nuclear fuel seals are often very small, making water removal from thus damaged fuel difficult and the cask desiccation period disproportionately prolonged.

In addition to the above-mentioned addition of an inert gas, the current state of the art registers several other measures aiming to improve and shorten the vacuum desiccation process. According to patent RU2238599C2, a desiccant is placed in the cask to facilitate desiccation, which is put into operation by decreasing pressure in the cask or through the action of the radiation and/or heat produced by the spent fuel. Its main disadvantage is the impossibility to start desiccant operation at a suitable moment in the advanced stage of the desiccation process and by the operating personnel, as well as the difficulty in getting a proof of the desiccant being functional. Patent EP0895250B1 describes the use of a desiccant to facilitate desiccation, which works by capturing water by means of a molecular sieve. And, finally, according to EP3792934B1, a desiccant in the form of powdered calcium oxide is placed in the cask, however not sooner than after finishing the vacuum desiccation process, in order to collect any residual water not removed by vacuum desiccation. This method, however, does not make it possible to accelerate the desiccation process as such.

### Subject of the invention

For the purposes of this invention, the term "cask for spent nuclear fuel and/or radioactive waste" means the transport and/or storage and/or repository cask used to store a radioactive material, which is mostly spent nuclear fuel, but also nuclear or other radioactive waste or other radioactive material. The term "spent nuclear fuel", for which the cask is intended, means especially advantageously also leaking spent nuclear fuel, including that only partially spent, where the fuel cluster seal has been damaged, letting water to penetrate into its interior.

The subject invention covers three aspects. According to the first aspect, a method of desiccation of casks for spent nuclear fuel or nuclear waste is provided, according to which a desiccant is put in such cask as early as possible during a vacuum desiccation process thus helping to intensify and accelerate it. According to this aspect of the invention, the desiccant is put in the cask at a precisely defined advanced stage of vacuum desiccation, i.e., in a phase when although the flow of water vapour let out through the exhaust route by means of a vacuum pump has already decreased considerably, it is still necessary to continue desiccation. The merit of this first aspect of the subject invention is that the desiccant is put in the cask on the basis of a measurement of a state of dryness expressed by an increase of a pressure of water vapours in the cask per certain unit of time when interrupting water vapour removal from the cask, while the value of the water vapour pressure increase in the cask is at most 10 hPa per 15 minutes, with the desiccant being put in the cask having the form of pills made of a mixture of calcium oxide and an anti-caking agent. The term "pill" means a desiccant compacted to form a compact body of a suitable form, the shape thus being lenticular, cylindrical of different heights, spherical, prismatic or any other suitable to ensure that the desiccant has a compact form meeting the requirements further placed on it. The cask desiccation method according to the invention is especially advantageously performed so that the above-mentioned desiccant is put in the cask when the increase of the water vapour pressure is at most 5 hPa per 15 minutes. As the dryness state can easily be ascertained by means of measuring equipment used to measure water vapour pressure increase in the cask when stopping cask interior exhaustion, by performing the method according to the invention a controlled desiccation process is provided, during which it is possible to determine, with a high level of precision, the moment at which it is preferable to put the desiccant in the cask. Such desiccation intensification by performing the cask desiccation method according to the invention can especially successfully be applied to desiccate casks holding leaking damaged spent fuel as with such material mainly the final phase of cask desiccation gets extended extremely, as water contained in the damaged fuel cluster is removed from it very slowly only through its damaged leaking jacket.

As a desiccant in the method of desiccation according to the invention, it is particularly advantageous to use pills from a mixture of calcium oxide (CaO) and an anti-caking agent, the anti-caking agent is advantageously one of salts of fatty acids, especially advantageously one of the magnesium salts of fatty acids and, most advantageously, magnesium stearate. According to the invention, the desiccant is advantageously made from a mixture of at most 99 % by weight of calcium oxide and of 1 to 3 % by weight of an anti-caking agent, i.e., at most 97 % by weight of calcium oxide with the content of 3 % of the anti-caking agent, while with the content of 1 % by weight of the anti-caking agent the mixture can contain up to 99 % by weight of calcium oxide, a presence of traces of other substances is not excluded. As already mentioned above, magnesium stearate is most advantageously used as the said anti-caking agent. The calcium oxide in the desiccant mixture absorbs water molecules very well and quickly through irreversible chemical bonding. Especially advantageously, the desiccant is a mixture of 2 % by weight of the said anti-caking agent and not more than 98 % by weight of calcium oxide. Most advantageously, the desiccant is mixture of at most 98 % by weight of calcium oxide and 2 % by weight of magnesium stearate. A presence of traces of other substances is not excluded.

According to the second aspect of the invention, a cask is provided to be used for radioactive materials, namely spent nuclear fuel or radioactive waste, which cask is provided with an inner room designed to be filled with radioactive materials, namely with a spent nuclear fuel or radioactive waste, and which cask is designed to be filled under water. This cask is further provided with a primary lid being made to close the inner room of the cask; the primary lid is provided with at least one closable bushing for dewatering and desiccation of the inner room of the cask after filling, and the subject of the invention is that this inner room of the cask contains at least one hollow body of an elongated shape, having a near and a distant end and containing a desiccant in its cavity, which desiccant is in the form of pills made of a mixture of at most 99 % by weight of calcium oxide and 1 to 3 % by weight of an anti-caking agent (with the overall composition of the mixture always being 100 % by weight), a presence of traces of other substances is not excluded, and the hollow body is located in the inner room of the cask under the primary lid bushing, with the outer diameter of the hollow body being smaller than the diameter of the primary lid bushing under which this follow body is located and with the length of this hollow body being greater than one half of the height of the inner room of the cask to ensure a sufficient capacity of the cavity in the hollow body for placing the desiccant in it, and this hollow body is further provided with holes in its surface to allow access of the inner atmosphere of the cask containing humidity to at least a part of the surface of the pills to enable absorption of the humidity by the pills. Thus, the desiccant makes it possible to accelerate desiccation of the atmosphere in the inner room of the cask as early as during vacuum desiccation as part of the humidity present in the inner atmosphere of the cask is absorbed by the desiccant. A man skilled in the art will understand the cask is for the most part made of a body having a bottom, sides and a neck to which the cask primary lid is attached and that the above-mentioned inner room of the cask is substantially an inner room of such body. For the sake of simplification, therefore in the description in the text below, the term "a cask with an inner room" can also mean a cask body in which the cask's inner room has actually been created.

According to one especially advantageous embodiment of the cask according to the invention, the desiccant placed in the hollow body is in the form of pills from a mixture of at most 98 % by weight of calcium oxide and 2 % by weight of an anti-caking agent, while most advantageously the desiccant is a mixture of at most 98 % by weight of calcium oxide and 2 % by weight of magnesium stearate, a presence of traces of other substances is not excluded. A man skilled in the art will understand that in all the descriptions of the desiccant mixture in any embodiment of the present invention, it is understood that the desiccant mixture consists of 100 % by weight of all substances present therein.

According to another especially advantageous embodiment, the cask according to the invention comprises a hollow body comprising a hollow tube of an arbitrary cross-section, which is provided on its surface with a set of holes created to allow access for the humidity present during vacuum desiccation in the atmosphere in the inner room of the cask to the desiccant pills arranged in this hollow tube. According to an especially advantageous example of the embodiment of the cask according to the invention, this hollow tube has a circular cross-section and is provided at least in its cylindrical wall with the above-mentioned set of holes to allow access for the humidity present during vacuum desiccation in the atmosphere in the inner room of the cask to the desiccant pills. The pill form of the desiccant ensures, on the one hand, that the desiccant will remain enclosed in the hollow body as calcium oxide in bulk form is a very fine powder able to penetrate through the finest sieves and makes it highly challenging to prevent it from spreading outside the room where the desiccant is placed, and, on the other hand, the pill form of the desiccant facilitates humidity absorption. This is because the pill form of the desiccant provides a large absorption surface for each pill, which is actually constantly accessible for humidity absorption. An expert will understand that the hollow tube forming the hollow body is provided with a means preventing the desiccant pills from falling out of it, especially with a bottom connected with the hollow tube at its lower end, but a man skilled in the art will also surely propose a lot of other possible embodiments of the means preventing the pills from falling out of the hollow tube, such as a grille, or the bottom can be a part of an insert placed in the hollow body, the insert itself being provided with a bottom, and so on.

According to yet another advantageous example of the embodiment of the cask according to the invention, the hollow body with the desiccant is arranged between the primary lid and the bottom of the inner room of the cask along the whole length thereof. According to yet another advantageous embodiment of the cask, this hollow body is only fixed in the cask by its distant end, which is fixed to the bottom of the cask, or this hollow body is only fixed in the cask by its near (upper) end, which is attached in the primary lid of the cask. According to yet another advantageous embodiment, this hollow body is fixed both by its near end in the primary lid and by its distant end to the bottom of the cask, whereby securing the hollow body in an especially robust way against movement in the inner room of the cask, such as during the cask handling process, when the cask suffers an impact or during earthquake so that the hollow body cannot get into contact inadvertently with the nuclear material stored in the cask, such as a spent nuclear fuel assembly, etc.

According to yet another advantageous example of the embodiment, the cask according to the invention is provided with a spent nuclear fuel supporting basket installed in the inner room of the cask, with the hollow body containing the desiccant being arranged in this supporting basket between the primary lid and the supporting basket bottom along the whole length of the supporting basket of the cask. According to another advantageous embodiment of the cask, this hollow body is fixed with its distant end to the bottom of the supporting basket or with its near end in the primary lid. According to yet more advantageous embodiment of the cask, both ends of the hollow body containing the desiccant are fixed, with the distant end being attached to the bottom of the supporting basket and the near end being attached in the primary lid, securing the hollow body containing the desiccant in an especially robust way against movement in the supporting basket during the cask handling process or when the cask suffers an impact or during earthquake so that the hollow body cannot get into contact inadvertently with the spent nuclear fuel assembly placed in the supporting basket.

According to yet another advantageous example of the embodiment, the cask according to the invention is fitted with a primary lid with at least two closable bushings and also with at least two hollow bodies containing the desiccant, with one hollow body containing the desiccant being arranged below each of the bushings. An expert will understand that it is also possible to design a cask provided with a primary lid with at least two closable bushings, with the hollow body being arranged under one of them only or, for instance, under only two bushings in the case of a primary lid with more than two bushings, so that it is not necessary to have the hollow body arranged under each of the bushings in the primary lid. All such embodiments of the cask are intended to be covered within the extent of the present invention.

It is obvious that the cask according to the second aspect of this invention can especially advantageously be used to perform the desiccation method according to the first aspect of the invention described herein. The cask according to the second aspect of this invention is intended for a radioactive material, advantageously for spent nuclear fuel and especially advantageously for leaking spent nuclear fuel. The cask according to the second aspect of this invention is designed for transport and/or storage and/or final reposition of radioactive materials, which are most frequently spent nuclear fuel but can also be other radioactive material. This cask, however, is also especially advantageous for transport and/or storage and/or final reposition of nuclear fuel where the leak-tightness of the cladding of at least one fuel cluster was damaged before loading into the cask as it will accelerate considerably the desiccation process of the cask after being loaded with such fuel.

According to the third aspect of this invention, a hollow body containing a desiccant is provided for the cask according to the second aspect of this invention, which hollow body has an elongated shape with a near and a distant end and is provided with a cavity designed between them, with either at least the near end being designed for a connection with the primary lid or the distant end being designed for a connection with the bottom of the supporting basket or with the inner bottom of the cask, while the length of the cavity equals at least to one half of the length of the inner room of the cask and contains a desiccant in the form of pills made of a mixture of at most 99 % by weight of calcium oxide and 1 to 3 % by weight of an anti-caking agent, and especially advantageously the desiccant is a mixture of 2 % by weight of the said anti-caking agent and not more than 98 % by weight of calcium oxide, while the said anti-caking agent is advantageously one of the salts of fatty acids, especially advantageously one of the magnesium salts of fatty acids and, most advantageously, magnesium stearate. According to another advantageous embodiment of the hollow body containing the desiccant, the hollow body includes a sieve insert, with the desiccant pills being put in such sieve insert arranged in the cavity of the hollow body. The cross-section of the sieve insert is smaller than the least dimension of the cross-section of the hollow body to enable installing the sieve insert in the body. In another advantageous embodiment of the hollow body containing the desiccant according to the third aspect of this invention, there is an expansion room created between the inner surface of the cavity of the hollow body and the sieve insert to allow for volumetric expansion of the desiccant when absorbing humidity. According to yet another advantageous embodiment of the hollow body according to the third aspect of this invention, the sieve insert has at least two layers, with an expansion room being created between at least two layers of the sieve insert to allow for volumetric expansion of the desiccant when absorbing humidity. In case of a sieve insert made with more than two layers, said expansion room can advantageously be provided between every two layers of the sieve insert. The sieve insert is especially advantageously elastic, where its individual layers or at least one of them allows its deformation by the volumetric expansion of the pills without damaging the particular layer of the sieve insert, or it is possible to design the sieve insert so that although the inner layer of the sieve insert gets damaged by expansion, the room between the inner and outer layers of the sieve insert is sufficient to provide adequate room for the volumetric expansion of the desiccant pills without damaging the outer layer by the expansion. Other embodiments of the sieve insert than those described herein are envisaged to make it possible to place desiccant pills in the sieve insert, to slide the sieve insert subsequently into the hollow tube and then, after sliding the hollow body containing the desiccant into the cask, to enable the required volumetric expansion of the desiccant pills. The embodiments of the hollow body as described here are intended to be applicable in any aspect of this invention.

The cask desiccation method according to the first aspect of this invention is performed especially advantageously by means of the hollow body containing the desiccant according to the third aspect of this invention, which, in its especially advantageous embodiment, is made of a hollow tube with a circular cross-section.

According to an advantageous embodiment, in accordance with all the aspects of this invention, the hollow body containing the desiccant will be provided with desiccant pills arranged in a sieve insert, especially advantageously in a two-layer sieve insert, which will then be placed in the hollow body. Such hollow body with the desiccant will be slid through the bushing in the primary lid into the cask. If the primary lid has two bushings, two hollow bodies with the desiccant can be inserted through such bushings into the cask. As already mentioned above, the hollow body actually serves as an outer shroud of the desiccant, protecting it against mechanical damage and ensuring that humidity in the form of water vapours present in the cask after appropriate dewatering can get to the desiccant as described in connection with the first aspect of the invention. An expert will understand that the sieve insert, if used, is also designed to ensure humidity penetration through it to the desiccant.

The dimensions of the hollow body containing the desiccant are such that the cavity thereof has its longitudinal dimension, i.e., the dimension in the direction of the vertical axis of the bushing opening in the primary lid, through which the hollow body is inserted into the cask interior, corresponding to at least one half of the depth of the cask interior, i.e., the height of the inner room between the primary lid bottom and the bottom of the inner room of the cask, to enable placing a sufficient quantity of desiccant in it. The length of the hollow body is many times greater than its diameter/cross-section, while the diameter/cross-section is smaller than the diameter/cross-section of the primary lid bushing through which the hollow body with the desiccant is inserted into the cask, to ensure putting the hollow body through the bushing in the cask. This will allow the hollow body with the desiccant to pass through the relatively narrow bushing in the cask primary lid and also to contain a sufficient quantity of desiccant to ensure desiccation as required. An example of an especially advantageous embodiment of the hollow body is one being designed as a tube of a circular cross-section fitted with a bottom. Especially advantageously, the length of the hollow body enables its secure attachment both with the distant end to the inner bottom of the cask or to the bottom of a supporting basket inserted into the cask if the cask contains a supporting basket to carry spent nuclear fuel assemblies, and with the near end in the cask lid or in the bushing provided in the lid. Thus, in this example of the embodiment, the length of the hollow body containing the desiccant is designed to extend over the whole inner height of the cask or the supporting basket and to allow secure attachment of both its ends to their respective neighbouring parts of the cask. As already mentioned above, the desiccant is placed in the hollow body in a two-layer sieve insert or in a multi-layer sieve insert to serve as another inner shroud preventing the desiccant from escaping out of the room of the hollow body in case of disintegration of the pill. It is obvious that all the sieve insert layers allow water vapours to penetrate through the inner shroud to the desiccant. The above-described room allowing volumetric expansion of the desiccant is especially advantageous because it provides a sufficient room for the volumetric expansion of calcium oxide, which occurs in a chemical reaction with the humidity being absorbed inside the cask.

As already mentioned above, the advantages of the pill form of the desiccant are that it ensures that the desiccant remains contained in the hollow body, not spreading into the inner room of the cask, and that the desiccant does not escape from the hollow body before being placed in the cask; further, the pill form of the desiccant provides a large absorption surface area for humidity absorption, where most of the surface of every pill is accessible for humidity absorption during the desiccation process, in contrast with the powder form where a crust of activated powder is formed on the powder surface, making humidity penetration to not activated powder through the said crust very slow. An expert will understand that every pill is able to absorb humidity very well as its volume is defined by its dimensions and, thus, it is easy to ensure humidity absorption in a relatively small pill with its whole volume in comparison with the current desiccation bodies which are not able to ensure absorption of such a great volume of humidity. Moreover, the two- or multi-layer structure of the inner shroud (sieve insert) advantageously ensures that no undesirable spreading of the desiccant into the inner room of the cask occurs even when the pill possibly disintegrates thanks to the chemical reaction of the desiccant and water vapours. The advantage of the pill-form desiccant containing an anti-caking agent is that it does not disintegrate into such a fine powder as calcium oxide proper not processed into the pill form even after being fully saturated by humidity.

### Description of drawings

The invention will be explained in the following examples of the embodiment and in the attached drawings, in which:
Fig. 1 represents a lateral view of the cask according to the invention in a sectional view where this cask contains a supporting basket and one hollow body containing a desiccant;
Fig. 2 represents a top view of the cask from Fig. 1, i.e., the cask with a supporting basket and one hollow body containing a desiccant, with the primary lid being removed;
Fig. 3 represents a lateral view of the cask according to the invention in a sectional view where this cask contains a supporting basket and two hollow bodies containing a desiccant;
Fig. 4 represents a top view of the cask from Fig. 3, i.e., the cask with a supporting basket and two hollow bodies containing a desiccant, with the primary lid being removed;
Fig. 5 represents a view of a possible embodiment of the hollow body containing a desiccant.

### Preferred embodiments

The present invention will be described using specific examples of embodiment and referring to the enclosed drawings, but the invention is not intended to be restricted to the described examples. These examples of the embodiment only serve to facilitate the understanding of the subject of the invention, and the invention is only limited by the wording of the patent claims. Furthermore, one has to understand that the enclosed drawings are schematics only and are not intended as detailed descriptions of the invention and, therefore, they should not be explained as restricting the extent of the protection of the invention to the depicted embodiments. Some elements may be exaggerated in the drawings for illustrative purposes and may not be drawn to scale. The dimensions of the individual elements may not correspond to their actual dimensions in the application of the invention.

The expressions relating to orientation in room, such as "on the left", "on the right", "below", "up" and similar are used here to facilitate the description of the relation of one element or feature to another element (other elements) or another feature (other features) as described in the pictures. The expressions relating to orientation in room, however, may also contain other orientation of a given element or feature during use or in operation beyond the orientations depicted in the pictures. For example, if the device shown in the pictures is turned upside down while in use, the elements described or shown in the pictures as "on the top" or "above" other elements or features will thus be oriented "under" other elements or features. Thus, the example expression "on the top" may include both up and down orientations. The device, however, may also have other orientation (e.g., being turned slightly by a certain angle regarding the observer or otherwise). It is therefore important to realize that the descriptive expressions concerning orientation used here must then be interpreted appropriately.

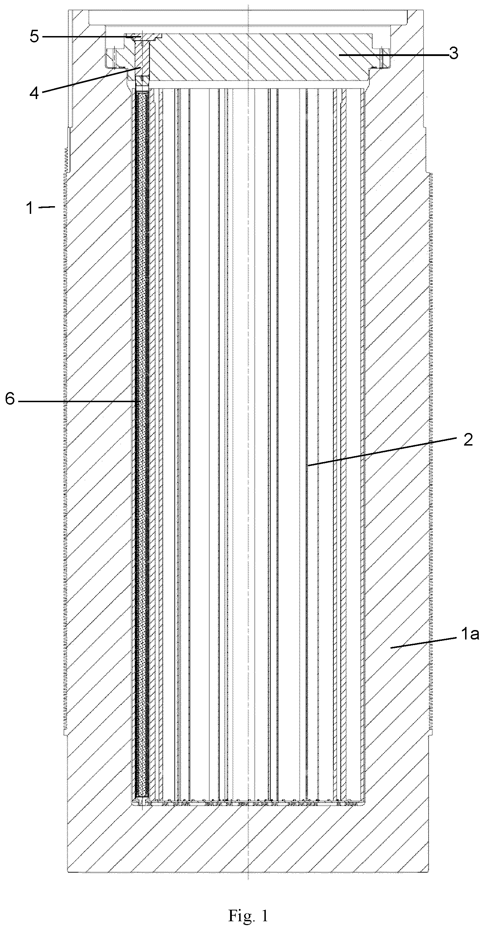

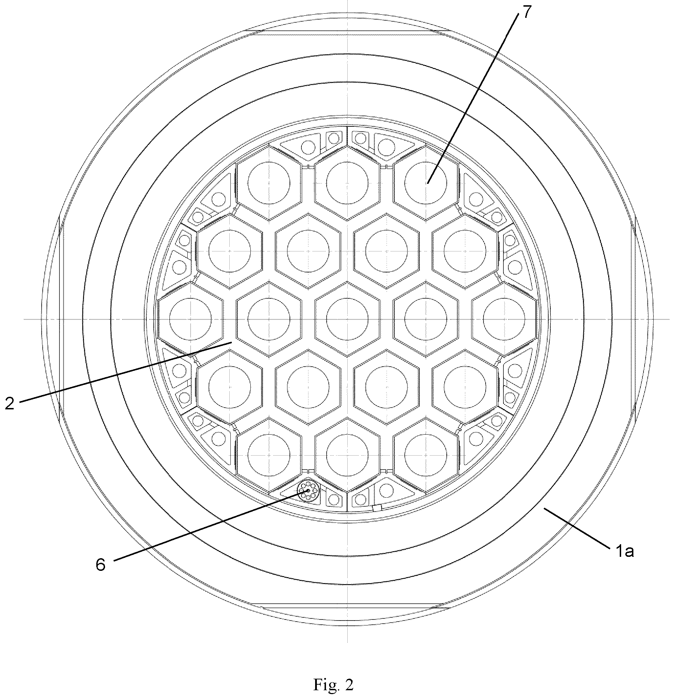

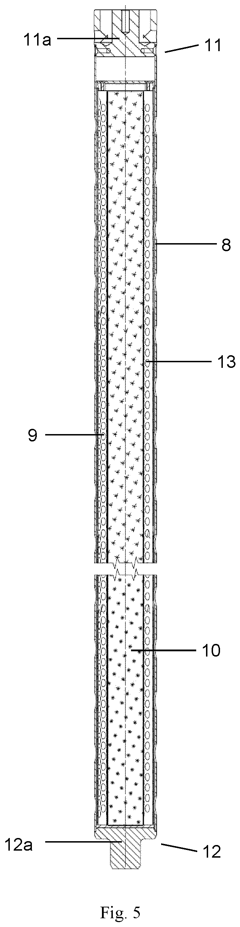

Fig. 1. shows an example of the embodiment of spent nuclear fuel cask 1 with one hollow body 6 containing a desiccant. Cask 1 comprises a body 1a having a cylindrical jacket provided with a neck on the one end and with a bottom on the other, wherein these individual parts are connected into a complete unit creating the body 1a with an inner room to be filled with a spent nuclear fuel or radioactive waste, a primary lid 3 designed to close the neck of the body 1a, where this primary lid 1 is provided with one bushing 4, a closable cap 5 of the bushing 4 which can be screwed into the bushing 4 or used otherwise to close the bushing 4 hermetically, a supporting basket 2 for fuel assemblies, and one hollow body 6 with a desiccant. Fig. 2 shows a top view of the cask from Fig. 1, where it is obvious that the hollow body 6 with a desiccant is placed within the supporting basket 2, wherein the supporting basket 2 contains cells 7 for fuel assemblies. No fuel assemblies are depicted in Fig. 2 for simplification. An example of the hollow body 6 with the desiccant is shown in Fig. 5. As it is obvious from Fig. 1, the hollow body 6 with the desiccant has such a length to extend from the primary lid 1 as far as to the bottom of the supporting basket 2. In this example of the embodiment, the hollow body 6 with the desiccant is arranged in the cavity formed in the supporting basket 2 and secured against movement in it. The hollow body 6 with the desiccant is inserted into this cavity in the supporting basket by being slid from the upper end of the supporting basket 2 after passing through the bushing 4 in the primary lid 1, being attached against movement with its upper/near end 11 in the primary lid 1 in the place of the bushing 4 and with its lower/distant end 12 to the bottom of the supporting basket. An expert will understand that the supporting basket is not an indispensable part of the cask and is used advantageously to hold spent nuclear fuel in the cask 1. In a not depicted example of the embodiment, the cask is designed substantially identically as in Fig. 1, but not comprising the supporting basket 2. When the supporting basket 2 is absent, the hollow body can be attached directly to the cask bottom or to the bottom of its body 1a. In such a case, the upper/near end 11 can be attached directly in the bushing 4 of the primary lid 3 or connected otherwise with the primary lid. It is also possible to attach the upper end of the hollow body 6 containing the desiccant in the cask body 1a by means of suitable spacers and other well-known attachment elements.

Fig.5 discloses an especially advantageous example of the embodiment of the hollow body 6 containing the desiccant according to the third aspect of this invention, which is applicable in all the examples of the cask embodiment according to the second aspect of this invention and also in the application of the cask desiccation method according to the first aspect of this invention. In Fig. 5, the hollow body 6 containing the desiccant is assembled from a hollow tube 8 with a circular cross-section, representing the outer shroud of the desiccant 10, the hollow tube 8 is provided with an upper end part 11a at its upper/near end 11 and with a lower end part 12a at its distant end 12. Hollow tube 8 is especially advantageously made of an austenitic stainless steel. A two-layer sieve insert 9 forming an inner shroud of desiccant 10 is arranged in the hollow tube 8. An expansion room 13 is created between the two layers of the sieve insert 9 to allow a volumetric expansion of pills of the desiccant 10 in absorbing humidity. According to another example of the embodiment of the hollow body 6 containing the desiccant, not depicted here, the sieve insert has three layers, with the expansion room allowing volumetric expansion of the desiccant in absorbing humidity being provided between every two neighbouring layers, so that the hollow body 6 containing the desiccant comprises two concentric expansion rooms. According to another not depicted example of the embodiment of the hollow body containing the desiccant, the sieve insert 9 has two layers and is provided at its upper and lower ends with spacers to create an expansion room between the outer layer of the sieve insert 9 and the inner surface of the hollow tube 8. An expert will understand that such hollow body can be provided with spacers to ensure the existence of an expansion room also in the sieve insert filled with desiccant pills while handling the sieve insert or while handling the hollow body and, at the same time, to allow an expansion of the desiccant pills in humidity absorption. It is obvious from the description above that the expansion room in the case of a sieve insert containing more than two layers may but does not need to be created between every two layers of the sieve insert. In the example of the embodiment shown in Fig. 5, the sieve insert is designed especially advantageously as elastic, whereby allowing a deformation of its individual layers in the volumetric expansion of the pills without damaging the sieve insert layer in question. According to an example of the embodiment not depicted here, it is possible to construct the sieve insert so that although its inner layer is not elastic, the remaining part of its surface remains integral when part of the surface gets damaged, so that even if the inner layer of the sieve insert gets damaged in the expansion of the desiccant pills in the places where the expanding desiccant pills lean against it, the inner layer will keep its integrity for at least the required period of time and will keep the remaining pills grouped as needed, while the room between the inner and outer layers of the sieve insert is sufficient to provide a room required for the volumetric expansion of the desiccant pills so as not to damage the outer layer of the sieve insert by the expansion any more or it may be elastic to such an extent that it does not get damaged even with maximum expansion. The same principles can be applied in multi-layer sieve inserts according to other examples of the embodiment of the hollow body not described here, which, however, can be designed by an expert on the basis of the criteria described here without using any inventive efforts, so that all such embodiments will fall within the scope of the invention.

The method of desiccation of cask 1 according to the exemplary embodiment of the invention is performed as follows: Body 1a of cask 1 is loaded with spent nuclear fuel under water in the fuel storage pool, closed with primary lid 3 (still under water) and removed from the pool. Closure of the body 1a of the cask 1 with the primary lid 1 is finished and a pumping tube is slid into the cask 1 through the bushing 4 in the primary lid 1 to draw water out of the inner room of the cask 1. This pumping tube is also used subsequently for a vacuum desiccation immediately following the dewatering process. To avoid overheating the spent nuclear fuel, especially the metal tubes of the fuel clusters or the so-called cladding in which the radioactive material proper is enclosed, helium is started to be added after the lapse a certain period of time (which period of time is determined by the residual thermal power of the spent nuclear fuel batch in question) into the interior of cask 1 without interrupting the vacuum desiccation process, namely by exhausting the gaseous mixture from the interior through the slid-in pumping tube and by adding helium to the interior of cask 1 through bushing 4 in primary lid 3 around the pumping tube. Pressure inside cask 1 is monitored from the beginning of vacuum desiccation and the state of desiccation is determined by means of measuring equipment. The state of desiccation is measured after starting the addition of helium by closing the helium inlet periodically after a certain period of the exhaustion, stopping the exhaustion and measuring a pressure increase in the vacuum created in the cask by exhausting the gaseous mixture over a determined time interval. After reaching the determined pressure increase value, which, in this example, is at most 5 hPa per 15 minutes, the hollow body 6 containing the desiccant is inserted. Before the insertion, the inner room of the cask 1 is filled with helium to a pressure identical with the ambient, the pumping tube is removed from the inner room through the bushing 4 in the primary lid and, subsequently, the hollow body 6 containing the desiccant is inserted instead of it. After that, the exhaustion of the cask inner room through the bushing 4 by means of a suitable technical means is resumed. For the purposes of this invention, the term "suitable technical means" means one which enables a gaseous mixture exhaustion from the cask interior through the bushing 4 even after inserting the hollow body containing the desiccant. For instance, said suitable technical means is considered to be the upper end part 11a being provided with a hole or holes allowing to exhaust the gaseous mixture from the cask interior even after setting upper end part 11a in bushing 4. If the pressure increase test is repeated after reaching the last test pressure and pressure increase is found lower than that in the previous measurement before putting in the desiccant, the desiccant is proved to be functional. The desiccation process is continued by adding helium, which is done by interrupting exhaustion, measuring pressure increase and then filling helium to the determined pressure level in the cask interior, such as a pressure higher by 20 hPa than that at the end of pressure increase test, and exhaustion is resumed. The above-described cycles are repeated until meeting the following two conditions at the same time: the pressure increase measured in the pressure increase tests has decreased to a determined value, such as 1 hPa per 15 minutes or less, and the pressure increase tests show a certain stabilized state, such as when pressure increase values measured in the last two pressure increase tests differ from each other by less than 0.1 hPa per 15 minutes, for instance.

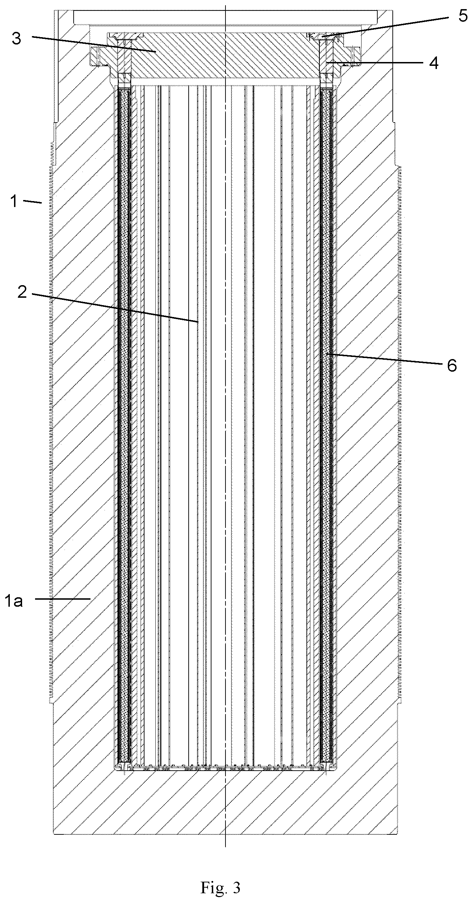

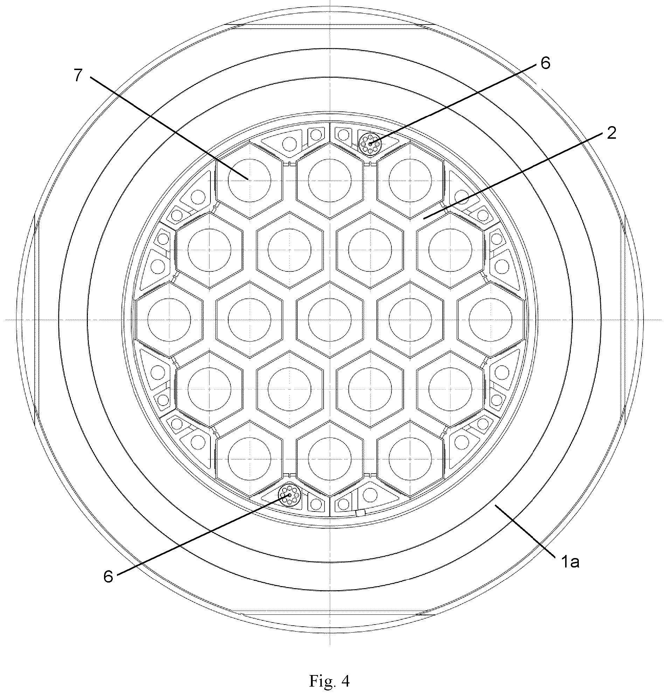

Fig. 3 shows an example of the embodiment of cask 1 containing two bushings 4 in the primary lid, with one hollow body 6 containing a desiccant being arranged under each of them, so that such cask 1 contains two desiccants. The cask 1 is designed substantially identically as that shown in Fig. 1 and 2, only with the primary lid 1 being provided with two bushings 4, of which each is provided with a closable cap 5 in Fig. 3. Similarly, as in Fig. 1 and 2, the cask shown in Fig. 3 is provided with the supporting basket 2 for fuel assemblies and, further, with two follow bodies 6 containing the desiccant. A top view of this cask 1 is presented in Fig. 4 to show the positioning of the hollow bodies 6 containing the desiccant in the supporting basket 2 with cells 7 for fuel assemblies. In this example of the embodiment, the hollow body 6 containing the desiccant is the hollow body 6 shown in Fig. 5. Everything provided in connection with the embodiment shown in Fig. 1 and 2 can be applied to Fig. 3 and 4 with the exception of the number of the bushings 4 and the hollow bodies 6.

According to another example of the embodiment of the invention, the cask is loaded with spent nuclear fuel under water in the fuel storage pool, closed with the primary lid (still under water) and removed from the pool. Closure of the primary lid in the cask body is finished and a pumping tube is slid through one of the bushings in the primary lid to draw water out of the inner room of the cask. This pumping tube is also used for a vacuum desiccation immediately following the dewatering process. Both bushings in the primary lid are used advantageously for the vacuum desiccation process, i.e., to exhaust the cask inner room. To avoid overheating the spent nuclear fuel, especially the metal tubes of the fuel clusters or the so-called cladding in which the radioactive material proper is enclosed, helium is started to be added after lapsing a certain period of time into the interior of the cask, which period of time is determined by the residual thermal power of the spent nuclear fuel batch in question, without interrupting the desiccation process, namely by exhausting the gaseous mixture from the interior through the slid-in pumping tube and by supplying helium into the cask interior through the other bushing in the primary lid where no pumping tube is present. Pressure inside the cask is monitored from the beginning of vacuum desiccation by means of measuring equipment. During the desiccation phase with the addition of helium, a dryness test is continuously carried out by shutting off the helium supply, stopping the pumping and monitoring the pressure increase in the vacuum inside the cask over a determined time interval. After reaching the determined limiting value, which, in this example of the embodiment, is at most 10 hPa per 15 minutes, i.e., possibly even lower, if at the interruption of exhaustion, the pressure increase value is found to be lower than the limiting pressure increase of 10 hPa per 15 minutes, the last phase of desiccation is started, namely vacuum desiccation by means of a desiccant. The exhaustion process is stopped, the cask inner room is filled with helium to a pressure identical with the ambient and the first body containing a desiccant is inserted through the primary lid bushing not occupied by the pumping tube. Exhaustion of the cask inner room is resumed through the bushing in the primary lid where the pumping tube is inserted. After reaching the last test pressure increase value, the pressure increase test is repeated. If pressure increase is found lower than that in the previous measurement before putting in the desiccant, the desiccant is proved to be functional. The cask is then filled with helium to the ambient pressure, the pumping tube is removed through the primary lid bushing and the second body containing a desiccant is inserted. Exhaustion of the cask inner room is resumed. After reaching the last test pressure increase value, the pressure increase test is repeated. If pressure increase is found lower than that in the previous measurement with the first desiccant, the second desiccant is proved to be functional. The desiccation process is continued by adding helium, which is done by interrupting exhaustion, measuring pressure increase and then filling helium to a determined pressure level in the cask interior, e.g. to a pressure higher by 20 hPa than that at the end of the pressure increase test, and the exhaustion is resumed. The above-described cycles are repeated until meeting the following two conditions at the same time: the pressure increase measured in the pressure increase tests has decreased to a determined value, such as 1 hPa per 15 minutes or less, and the pressure increase tests show a certain stabilized state, such as when pressure increase values measured in the last two pressure increase tests differ from each other by less than 0.1 hPa per 15 minutes, for instance.

The advantage of the example with two bodies containing a desiccant as against the example with one body containing a desiccant is that the desiccation process is more effective, even faster, thanks to better distribution of the suction effect on the circumference and length of the supporting basket in the desiccation phase without helium and also thanks to improved distribution of helium in the supporting basket in the desiccation phase with the addition of helium without a desiccant. Further, the example with two bodies containing a desiccant makes it possible to put a double quantity of desiccant in the cask, i.e., to accelerate the last desiccation phase, which is dehydration by means of a desiccant. Especially advantageously, the advantages of this example with two desiccants manifest themselves when desiccating casks loaded with leaking spent nuclear fuel.

### Industrial applicability

The subject of the invention has practical application in the sphere of peaceful utilization of nuclear energy, especially in handling spent nuclear fuel, mainly leaking spent nuclear fuel, or other radioactive content.

### Reference numerals

- 1: Cask
- 1a: Cask body
- 2: Supporting basket
- 3: Primary lid
- 4: Primary lid bushing
- 5: Primary lid cap
- 6: Hollow body with desiccant
- 7: Fuel assembly cell
- 8: Outer shroud (hollow tube)
- 9: Inner shroud (two-layer sieve insert)
- 10: Desiccant
- 11: Near end
- 11a: Upper end part
- 12: Distant end
- 12a: Lower end part
- 13: Expansion room

## Claims

1. Method of desiccation of a cask for spent nuclear fuel, especially advantageously for a leaking spent nuclear fuel, and/or radioactive waste, the cask having at least one primary lid, a cask interior arranged under the at least one primary lid, the cask interior provided to hold the spent nuclear fuel or radioactive waste, wherein the cask is at first filled with spent nuclear fuel or radioactive waste containing water, especially with spent nuclear fuel or radioactive waste under water, after which the cask interior is dewatered mainly by pumping water out, and a vacuum desiccation of the cask interior takes place after said dewatering, **characterized in that** during the vacuum desiccation of the cask, the vacuum desiccation process is interrupted repeatedly, and during the period of each interruption a pressure increase in the cask caused by a water evaporation is measured over a pre-determined time interval to establish a degree of dryness achieved in the cask, after which, when reaching a degree of dryness in the cask which is defined by a pressure increase in the cask corresponding to at most 10 hPa per 15 minutes, at least one hollow body containing a desiccant is put into the cask interior to accelerate the effectiveness and/or rate of the desiccation, the desiccant being in a form of pills, and an access of an inner atmosphere is ensured to at least a part of the pill's surface to allow the pills to absorb humidity, and then the vacuum desiccation process is continued.

2. Method of desiccation of casks according to Claim 1, **characterized in that** the hollow body containing the desiccant is put in the cask when reaching a degree of dryness defined by pressure increase in the cask corresponding to a rate value of at most 5 hPa per 15 minutes.

3. Method of desiccation of casks according to either Claim 1 or Claim 2, **characterized in that** at least two hollow bodies containing a desiccant are put in the cask.

4. Cask (1) for spent nuclear fuel and/or radioactive waste is provided with a cask body (1a) with an inner room designed to be filled with spent nuclear fuel and/or radioactive waste, especially under water, and, further, with at least a primary lid (3) arranged to close the inner room of the body of cask (1), said inner room being provided under the primary lid (3), wherein the primary lid (3) is provided with at least one closable bushing (4) for dewatering and desiccation of the inner room of the cask after filling and where each closable bushing (4) is provided with a cap (5) to close it, **characterized in that** under at least one bushing (4) in the inner room of body (1a) of cask (1) at least one hollow body (6) of an elongated shape is arranged, having a near end (11) and a distant end (12) and a cavity between them, the hollow body (6) having a length greater than one half of the height of the inner room of body (1a) of cask (1), said hollow body (6) contains a desiccant (10) in the cavity in the form of pills from a mixture of at most 99 % by weight of calcium oxide and 1 to 3 % by weight of an anti-caking agent, wherein the hollow body (6) is provided with holes to allow an access of the humidity present in the inner room of cask (1) to the desiccant (10) during said desiccation, wherein the hollow body (6) is arranged under the bushing (4) of the primary lid (3) in the inner room of the cask body (1a) so that the longitudinal axis of hollow body (6) is parallel to the longitudinal axis of the body (1a) of the cask (1).

5. Cask according to Claim 4, **characterized in that** desiccant (10) is a mixture of at most 98 % by weight of calcium oxide and 2 % by weight of magnesium stearate.

6. Cask according to Claim 4 or 5, **characterized in that the** hollow body (6) containing a desiccant is a hollow tube of an appropriate shape and cross-section, provided to pass through the bushing (4) in the primary lid, the hollow tube having a wall provided with a set of holes created to allow access for the humidity present in the inner room of the cask to the pills of desiccant (10) during the desiccation.

7. Cask according to Claim 6, **characterized in that** the hollow tube (6) has a circular cross-section and is provided with a set of holes at least in its cylindrical wall to allow access for the humidity present in the inner room of the cask to the pills of desiccant (10) during the desiccation, wherein said pills in the hollow tube (6) are arranged in a sieve insert (9) preventing the desiccant from spreading into the inner room of the cask when the pills disintegrate.

8. Cask according to any of Claims 4 to 7, **characterized in that** the hollow body (6) containing a desiccant is arranged between primary lid (3) and the bottom of the inner room of the cask along its whole length and that hollow body (6) is attached with its distant end (12) to the bottom of body (1a) of cask (1) or with its near end (11) in primary lid (3) or with both ends (11, 12) to the bottom and in the primary lid to secure hollow body (6) against movement in the cask inner room.

9. Cask according to any of Claims 4 to 7, **characterized in that** the cask is provided with a supporting basket (2) for spent nuclear fuel arranged in the cask inner room, wherein the hollow body (6) is arranged in the supporting basket (2) between the primary lid (3) and the bottom of supporting basket (2) along the whole length of the cask and wherein the hollow body (6) is fixed with its distant end (12) to the bottom of supporting basket (2) or with its near end (11) in the primary lid (3) or with both ends to the bottom of the supporting basket and in the primary lid to fix the hollow body (6) against movement in the supporting basket (2).

10. Cask according to any of Claims 4 to 9, **characterized in that** the primary lid (3) is provided with two closable bushings (4) and two hollow bodies (6) containing a desiccant, one hollow body (6) containing a desiccant being arranged under each bushing (4), wherein each bushing (4) being fitted with a cap (5) to close it.

11. Hollow body (6) containing a desiccant for casks for spent nuclear fuel and/or radioactive waste, the hollow body (6) is provided with an inner room to be filled with spent nuclear fuel and/or radioactive waste, especially under water, **characterized in that** it has an elongated shape with a near end (11) and a distant end (12) and its length equals to at least one half of the height of the inner room of the cask, wherein at least the near end (11) is provided for a connection with a cask primary lid (3) and/or the distant end (12) is provided for a connection with a cask bottom or with a bottom of a supporting basket (2), the hollow body has a cavity arranged between the near end (11) and the distant end (12), the cavity containing a desiccant in the form of pills from a mixture of at least calcium oxide and magnesium stearate, said mixture contains 1 to 3 % by weight of magnesium stearate and at most 99% by weight of calcium oxide.

12. Hollow body (6) containing a desiccant according to Claim 11, **characterized in that** it is designed as a hollow tube (8) with a circular cross-section or with at least triangular cross-section, preferably with a square or multi-angular cross-section, the hollow tube (8) is provided with holes in its longitudinal wall to ensure access for humidity to desiccant (10), wherein the desiccant pills are arranged in a sieve insert (9), a cross-section of the sieve insert (9) with pills being smaller than the inner cross-section of the hollow tube (8) at least by an area provided as a free room allowing volumetric expansion of desiccant (10) when absorbing humidity.
